## Europäisches Patentamt

## European Patent Office

## Office européen des brevets

(11) Veröffentlichungsnummer: **0 195 324 B1**

# EUROPÄISCHE PATENTSCHRIFT

(45) Veröffentlichungstag der Patentschrift:
30.05.90

(21) Anmeldenummer: 86103040.1

(22) Anmeldetag: 07.03.86

(51) Int. Cl.⁵: **G11B 20/18, G11B 5/012**

(54) Kontrolleinheit für einen Magnetplattenspeicher.

(30) Priorität: 18.03.85 DE 3509744

(43) Veröffentlichungstag der Anmeldung:
24.09.86 Patentblatt 86/39

(45) Bekanntmachung des Hinweises auf die Patenterteilung:
30.05.90 Patentblatt 90/22

(84) Benannte Vertragsstaaten:
AT BE CH DE FR GB IT LI NL SE

(56) Entgegenhaltungen:
EP-A- 0 127 311
FR-A- 2 426 938
US-A- 3 771 143
WIRELESS WORLD, Band 89, Nr. 1564, Januar 1983, Seiten 76-78, Oichester, GB; "Data integrity in disc drives"
PATENTS ABSTRACTS OF JAPAN, Band 4, Nr. 70, 23. Mai 1980, Seite 161 P 12; & JP - A - 55 38 660
PATENTS ABSTRACTS OF JAPAN, Band 8, Nr. 133, 20. Juni 1984, Seite 144 P 281; & JP - A - 59 36 311
PATENTS ABSTRACTS OF JAPAN, Band 7, Nr. 202, 7. September 1983, Seite 16 P 221; & JP - A - 58 98 807
HEWLETT-PACKARD JOURNAL, Band 35, Nr. 1, Januar 1984, Seiten 3-6, Amstelveen, NL; K. WILKEN: "Two high-capacity disc drives"

(73) Patentinhaber: Siemens Aktiengesellschaft,
Wittelsbacherplatz 2, D-8000 München 2(DE)

(72) Erfinder: Wentzel, Peter, Dipl.-Ing., Eupenstrasse 12,
D-8900 Augsburg(DE)
Erfinder: Huber, Erich, Dipl.-Ing.,
Apotheker-Gelb-Strasse 4a,
D-8080 Fürstenfeldbruck(DE)
Erfinder: Weiss, Eckardt, Bernhard-Lichtenberg-Weg 20,
D-8000 München 81(DE)
Erfinder: Achatz, Florian, Dipl.-Phys., Josef
Thalhamerstrasse 5, D-8000 München 81(DE)

(56) Entgegenhaltungen: (Fortsetzung)
IBM TECHNICAL DISCOSURE BULLETIN, Band 19, Nr. 4, September 1976, Seiten 1424-1426, New York, US; J.E. DOHERMANN: "Defect skipping among fixed length records in direct access storage devices"
PATENTS ABSTRACTS OF JAPAN, Band 7, Nr. 202, 7. September 1983, Seite 16 P 221; & JP - A - 58 98 806
IBM TECHNICAL DISCLOSURE BULLETIN, Band 26, Nr. 4, September 1983, Seiten 1851-1852, New York, US; J.A. BOSCOVE et al: "Angular logical sector assignment format"

**Beschreibung**

Die Erfindung betrifft eine Kontrolleinheit für einen Magnetplattenspeicher entsprechend dem Oberbegriff des Patentanspruchs 1.

Die Plattenoberflächen von Magnetplattenspeichern weisen in der Regel nicht auszuschließende Defektstellen auf, die eine fehlerfreie Rekonstruktion von gespeicherten Daten nicht zulassen. Diese Stellen müssen bei der Bespeicherung durch geeignete Maßnahmen umgangen werden. Bei Magnetplattenspeichern gemäß dem Oberbegriff des Patentanspruches 1 mit fester Sektoreinteilung der Plattenflächen verwendet man in der Regel einige der Sektoren als Ersatzsektoren, die normalerweise nicht mit Daten belegt werden, sondern dazu dienen, normalerweise für defekte Sektoren bestimmte Daten aufzunehmen.

Bei dem aus IBM Technical Disclosure Bull.Vol.25, Nr. 10, März 1983, Seiten 5193/5194 bekannten Verfahren ist am Ende einer jeden Spur ein Ersatzsektor vorgesehen. Die Zuweisung der Ersatzsektoren erfolgt dabei derart, daß bei einem als defekt erkannten Sektor die Daten für diesen und die nachfolgenden Sektoren um jeweils einen Sektor zum Spurende hin verschoben gespeichert werden, wobei die Daten für den letzten Nutzsektor der Spur vom sich unmittelbar anschließenden Ersatzsektor aufgenommen werden. Da pro Spur nur ein einziger Ersatzsektor vorgesehen ist, kann diese Verschiebemethode nur im Falle eines einzigen Defektsektors innerhalb der Spur angewendet werden. Bei einem zweiten Defektsektor innerhalb derselben Spur besteht dann nur die Möglichkeit, die Daten für den zweiten Defektsektor unmittelbar in einen freien, unbenutzten Ersatzsektor einer anderen Spur auszulagern. Dies bedingt jedoch zwangsläufig eine erhebliche Leistungsminderung des Plattenspeichersystems, weil aufgrund der Tatsache, daß am zweiten Defektsektor ein Sprung von der Originalspur auf den Ersatzsektor in einer anderen Spur und anschließend gegebenenfalls ein Rücksprung auf die Originalspur stattfindet, eine zusätzliche Plattenumdrehung notwendig ist, die einen entsprechenden Zeitverlust nach sich zieht.

Bei einem durch EP-A 0 127 311 bekannten Verfahren sind die für einen von den übereinanderliegenden Spuren gebildeten Zylinder in ausreichender Anzahl vorgesehenen Ersatzsektoren alle zu einer Gruppe zusammengefaßt, die das Ende des Zylinders bildet. Mit jedem innerhalb eines solchen Zylinders auftretenden Defektsektor vergrössert sich daher in Folge der Verschiebung über die Spurengrenzen hinweg die Verschiebeamplitude für alle nachfolgenden Daten, bis schließlich die Gruppe der Ersatzsektoren am Ende des Zylinders erreicht wird. Hierdurch können zwar Umsteuervorgänge auf andere Spuren und Zeitverluste durch zusätzliche Plattenumdrehungen vermieden werden, jedoch führt die mit zunehmender Anzahl von Defektsektoren im Zylinder steigender Verschiebeamplitude zu zunehmend längeren Wartezeiten beim Aufsuchen von gespeicherten Daten und damit zu einem erheblichen Abfall der Leistungsfähigkeit des Magnetplattenspeichers, insbesondere bei einer Häufung der Defektsektoren am Anfang des Zylinders.

Der vorliegenden Erfindung liegt daher die Aufgabe zugrunde, eine Magnetplattenspeicher-Kontrolleinheit der eingangs genannten Art in der Weise auszubilden, daß bei Magnetplatten mit mehr als einem Defektsektor pro Zylinder eine Zuweisung entsprechender Ersatzsektoren mit möglichst geringem Zeit- bzw. Leistungsverlust realisierbar ist.

Diese Aufgabe wird erfindungsgemäß durch die kennzeichnenden Merkmale des Patentanspruchs 1 gelöst. Vorteilhafte Weiterbildungen sind in den Unteransprüchen angegeben.

Im folgenden wird ein Ausführungsbeispiel der Erfindung anhand der Zeichnung näher erläutert, wobei für die Zuweisung der Ersatzsektoren mehrere Varianten aufgezeigt werden.

Dabei zeigen

FIG 1 den prinzipiellen Aufbau eines Magnetplattenspeichers mit zugehöriger Kontrolleinheit

FIG 2 ein Flußdiagramm für den Steuerungsablauf der Kontrolleinheit von FIG 1,

FIG 3 und FIG 4 Prinzipdarstellungen zur Erläuterung der Zuweisung von Ersatzsektoren entsprechend dem Stand der Technik und

FIG 5 bis FIG 10 Prinzipdarstellungen zur Erläuterung der Zuweisung von Ersatzsektoren gemäß den einzelnen Varianten der Erfindung.

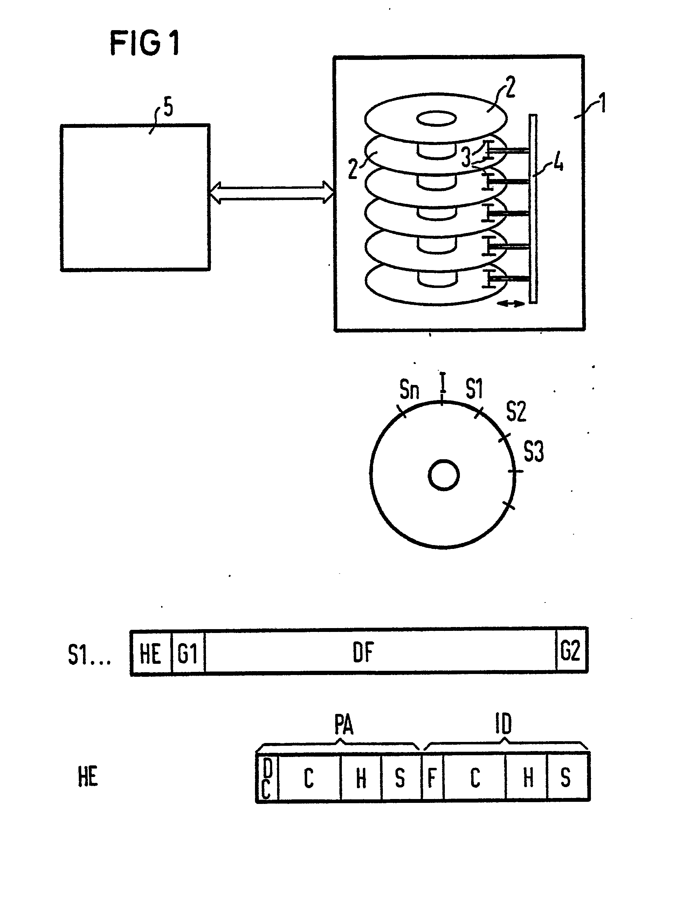

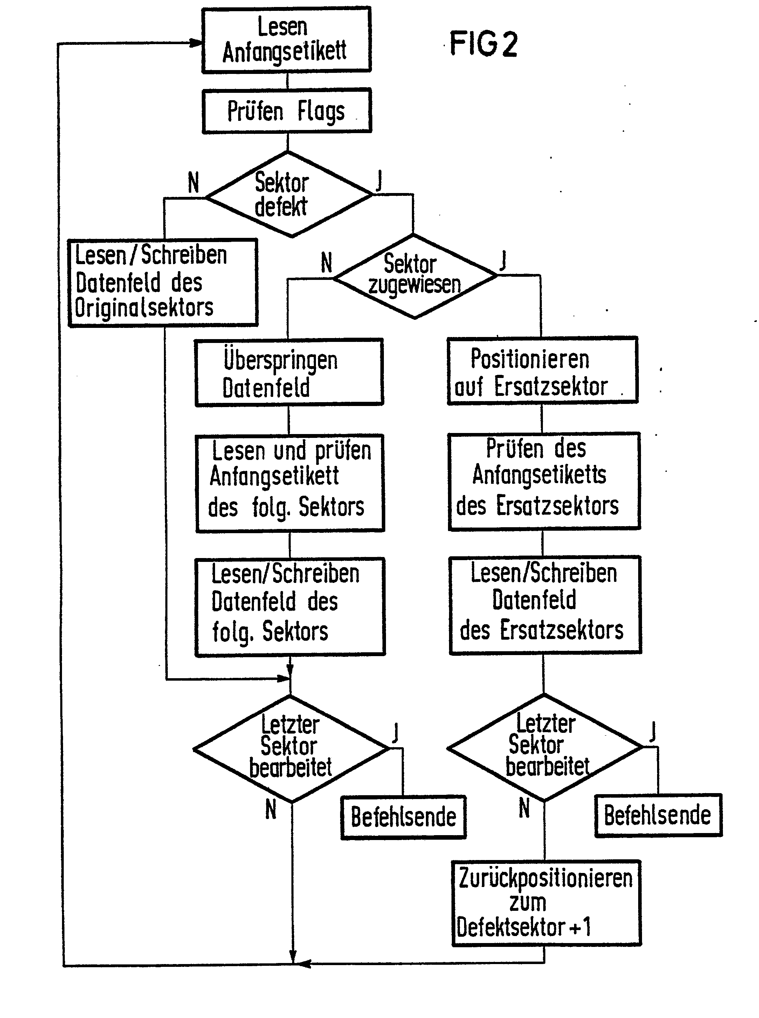

Die FIG 1 zeigt einen Magnetplattenspeicher 1 mit mehreren auf einer gemeinsamen Drehachse gelagerten Magnetplatten 2 und mehreren jeweils einer Plattenoberfläche zugeordneten Magnetköpfen 3. Diese Magnetköpfe 3 sind mittels eines gemeinsamen Positionierantriebes 4 radial hin- und herbewegbar und dabei jeweils auf einen Zylinder, das heißt auf jeweils über- bzw. untereinander liegende Spuren ausrichtbar. Die auf der Magnetplatte 2 konzentrisch angeordneten Spuren sind, beginnend bei einem Index I in mehrere Sektoren S1, S2, S3 ..Sn unterteilt, die ihrerseits ein Anfangsetikett HE und ein durch zwei Blocklücken G1, G2 begrenztes Datenfeld DF beinhalten. Das Anfangsetikett HE ist zweigeteilt und enthält im linken Teil die physikalische Adresse PA mit Distanzzähler DC (1 Halbbyte), Zylinderadresse C (3 Halbbytes), Kopfadresse H (2 Halbbytes) und Sektoradresse S (2 Halbbytes). Der rechte Teil enthält eine logische Adresse ID, die ebenfalls aus einer Zylinderadresse C, einer Kopfadresse H und einer Sektoradresse S zusammengesetzt ist und zusätzliche Kennzeichenbits, sogenannte Flags F enthält. Die physikalische Adresse PA gibt den tatsächlichen Ort auf dem Plattenspeicher an, d.h. die Nummer des Zylinders, die Nummer des Kopfes oder der Spur und die Nummer des Sektors. Die logische Adresse ID beinhaltet dagegen den Wert nach einer logischen Sequenz, in der nur tatsächlich benutzte Blöcke aufgezählt werden. Mit dem Magnetplattenspeicher 1 ist eine Kontrolleinheit 5 verbunden, die den gesamten Verfahrensablauf beispielsweise gemäß dem in FIG 2 gezeigten Flußdiagramm steuert.

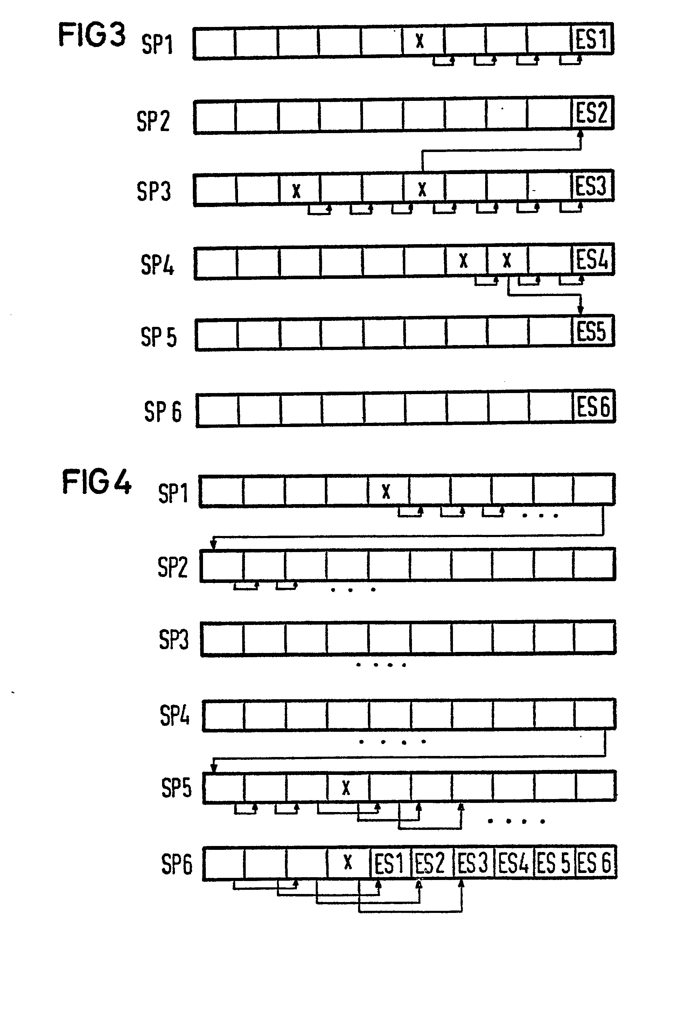

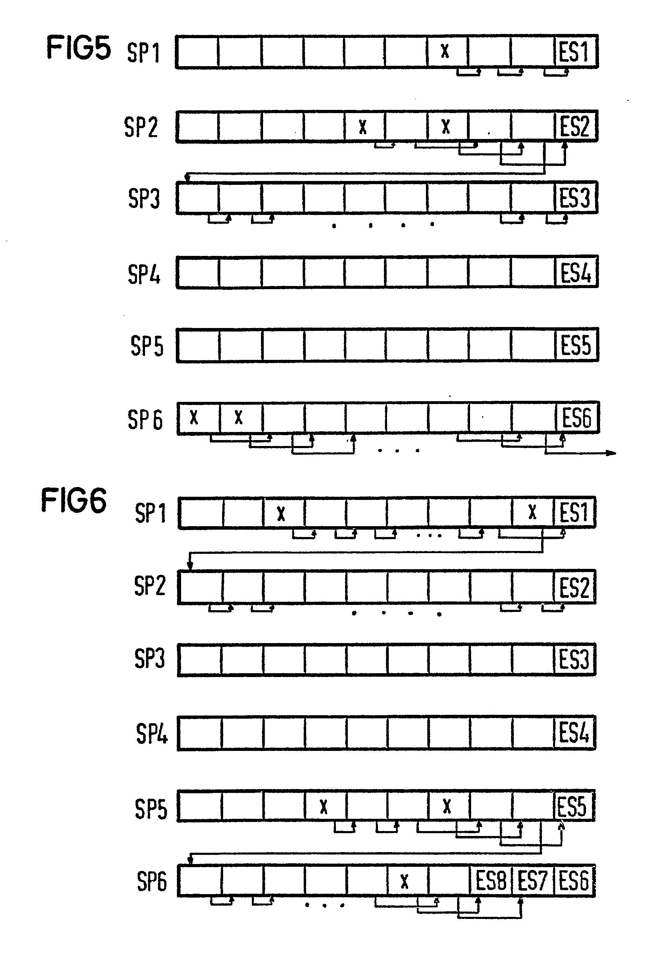

Einzelheiten der bekannten Verfahren zur Zuweisung von Ersatzblöcken sowie mehrere erfindungsgemäße Varianten sind aus den Figuren 3 und 4 bzw. aus den Figuren 5 bis l0 ersichtlich. Die einzelnen Beispiele zeigen jeweils sechs zu einem gemeinsamen Zylinder gehörende Spuren SP1 ... SP6, die ihrerseits in jeweils zehn Sektoren unterteilt sind.

Gemäß dem in FIG 3 dargestellten Beispiel für ein bekanntes Zuweisungssystem ist am Ende jeder Spur je ein Ersatzsektor ES1 bis ES6 vorgesehen. Tritt nun, wie in der Spur SP1 ersichtlich, in einem einzigen Sektor ein Defekt auf (siehe den mit X markierten Sektor), dann werden in diesem Sektor keine Daten aufgezeichnet. Nur im zugehörigen Anfangsetikett HE wird der Vermerk hinterlegt, daß dieser Sektor nicht benutzbar ist. Die Daten, die an sich in diesem Sektor stehen würden, werden nun entsprechend den Pfeilen in den nächsten Sektor geschoben und die Daten dieses nächsten Sektors in den übernächsten usw. ...., so daß die Daten des letzten Nutzsektors schließlich in den Ersatzsektor ES1 gelangen. Wenn, wie am Beispiel der dritten und vierten Spur SP3, SP4 ersichtlich, längs einer Spur zwei defekte Sektoren auftreten, werden die Daten für den ersten defekten Sektor und die für die nachfolgenden Sektoren, entsprechend dem Beispiel in der ersten Spur SP1, jeweils um einen Sektor verschoben, während die Daten für den zweiten Defektsektor unmittelbar in einen Ersatzsektor einer anderen Spur innerhalb des gleichen Zylinders, im dargestellten Beispiel in den Ersatzsektor ES2 der zweiten Spur SP2 bzw. in den Ersatzsektor ES5 der fünften Spur SP5 ausgelagert werden. Ein entsprechendes Kennzeichenbit bzw. Flag im Anfangsetikett HE des zweiten Defektsektors signalisiert, daß dieser Sektor defekt ist und die entsprechenden Daten ausgelagert sind. Das Anfangsetikett HE beinhaltet außerdem die Adresse des Ersatzsektors. Beim Lesen der dritten Spur SP3 ist nun an der Stelle des zweiten Defektsektors ein Sprung in den Ersatzsektor ES2 der zweiten Spur SP2 erforderlich. Da dieser Ersatzsektor ES2 gegenüber dem Defektsektor um vier Sektoren versetzt ist, muß beim Lesen solange gewartet werden, bis der Ersatzsektor ES2 in den Bereich des Abtastkopfes kommt. Nach Bearbeitung des Datenfeldes in diesem Ersatzsektor erfolgt wieder ein Rücksprung auf die Originalspur in den unmittelbar an den zweiten Defektsektor anschließenden Sektor, wobei der zweimalige Spurensprung zusätzlich eine ganze Plattenumdrehung erfordert. Wesentlich ist, daß der Ersatzsektor in der anderen Spur benutzbar ist, was letztlich bedeutet, daß diese Spur selbst keinen Defektsektor aufweisen darf. Defektfreie Spuren werden vorab bei der Formatierung des Plattenspeichers festgestellt, wobei über den Zustand des gesamten Speicherbereichs sozusagen Buch geführt wird.

Bei dem in FIG 4 dargestellten Beispiel entsprechend dem anderen bekannten Verfahren sind sämtliche Ersatzsektoren ES1 bis ES6 zu einer geschlossenen Gruppe zusammengefaßt und am Ende der letzten Spur SP6 angeordnet. Bei jedem auftretenden Defektsektor X erfolgt hierbei ebenfalls eine Verschiebung der zu speichernden Daten, die durch die Pfeile angedeutet ist. Diese Verschiebung endet aber im Gegensatz zum Beispiel von FIG 3 nicht am Ende einer jeden Spur, sondern setzt sich über alle nachfolgenden Spuren hinweg fort, bis in der letzten Spur SP6 die Ersatzsektoren ES1 bis ES6 erreicht werden, wobei sich mit jedem Defektsektor die Verschiebeamplitude für die jeweils nachfolgenden Daten erhöht.

Eine erste Variante eines erfindungsgemäßen Zuweisungsverfahrens für Ersatzsektoren ist in FIG 5 dargestellt. Diese Variante knüpft an das Verfahren gemäß FIG 3 an, unterscheidet sich aber dadurch, daß auch bei zwei und mehr Defektsektoren pro Spur zunächst keine Auslagerung in einen Ersatzsektor einer anderen Spur erforderlich ist. Wie das Beispiel in der zweiten Spur SP2 zeigt, werden nicht nur die Daten für den ersten Defektsektor, sondern auch die für den zweiten Defektsektor innerhalb der Spur verschoben, wobei die im Distanzzähler DC des Anfangsetiketts HE angegebene Verschiebeamplitude der Zahl der Defektsektoren entspricht und bis zum nächstfolgenden Ersatzsektor ES2 unverändert bleibt. Der Verschiebemodus setzt sich in die nächstfolgende dritte Spur SP3 fort, in der sich die Verschiebeamplitude nach dem Ersatzsektor ES2 um einen Sektor verringert, weil inzwischen die verschobenen Daten für einen Sektor der zweiten Spur SP2 im Ersatzsektor ES2 abgelegt worden sind. Da in der dritten Spur SP3 kein weiterer Defektsektor auftritt, werden die Daten für die einzelnen Sektoren mit gleichbleibender Verschiebeamplitude um jeweils einen Sektor zum Spurende hin verschoben und der am Ende der dritten Spur vorgesehene Ersatzsektor ES3 aufgefüllt.

In der vierten und fünften Spur SP4, SP5 bleiben die entsprechenden Ersatzsektoren ES4, ES5 unbenutzt, weil hier keine Defektsektoren vorhanden sind. Dagegen ergibt sich aufgrund der zwei Defektsektoren in der sechsten Spur SP6 eine entsprechend große Verschiebeamplitude für den Rest dieser Spur mit der Folge, daß am Ende nur der vorletzte Datenblock im Ersatzsektor ES6 verschoben abgespeichert werden kann, während der letzte Datenblock anderweitig abzuspeichern ist. Ein solcher Fall tritt aber nur ein, wenn in den restlichen Spuren mehr Defektsektoren auftreten als Ersatzsektoren zur Verfügung stehen.

Insgesamt wird durch die über den gesamten Zylinder verteilten Ersatzsektoren ES1 bis ES6 gegenüber dem Beispiel von FIG 4 ein fortlaufendes Anwachsen der Verschiebeamplitude bis zum Ende des Zylinders vermieden und damit eine Verschiebung eines Teiles der Daten vielfach umgangen, so daß diese schneller aufgefunden werden können und die Systemleistung negativ beeinflussende Wartezeiten verringert werden können.

Lediglich für die am Ende eines Zylinders übrigbleibenden Datenblöcke entstehen in der üblichen Weise Verlustzeiten infolge der dann notwendig werdenden Umsteuerung. Das Ausmaß dieser Verlustzeiten aber kann aber durch zusätzliche Maßnahmen beeinflußt werden.

Eine solche Maßnahme zeigt das Beispiel gemäß FIG 6, bei dem gegenüber dem Ausführungsbeispiel nach FIG 5 in Anlehnung an das Beispiel von FIG 4 in der letzten Spur SP6 an Stelle des einen Ersatzsektors ES6 mehrere Ersatzsektoren ES6 bis ES8 vorgesehen sind. Diese zusätzliche Bündelung von mehreren Ersatzsektoren am Ende des Zylinders bietet den Vorteil, daß auch bei größeren Verschiebeamplituden aufgrund mehrfach auftretender Defektsektoren in den letzten Spuren mit größerer Wahrscheinlichkeit alle verschobenen Datenblöcke in Ersatzsektoren innerhalb des Zylinders untergebracht werden können und eine Auslagerung in einen anderen Zylinder mit den damit notwendigen Positionsänderungen vermieden werden kann.

Bei den Ausführungsbeispielen gemäß FIG 5 und FIG 6 wurde unterstellt, daß nicht auf freibleibende Ersatzsektoren in vorherigen Spuren zurückgegriffen werden kann, obwohl diese unbenutzt sind (siehe ES4, ES5 in FIG 5 und ES3, ES4 in FIG 6).

Dies führt daher zu einer aufwendigen Umsteuerung auf einen anderen Zylinder, wenn am Ende eines Zylinders gegebenenfalls noch Datenblöcke übrigbleiben, oder aber es wird die Anzahl der Nutzsektoren durch die Umwandlung in Ersatzsektoren verringert.

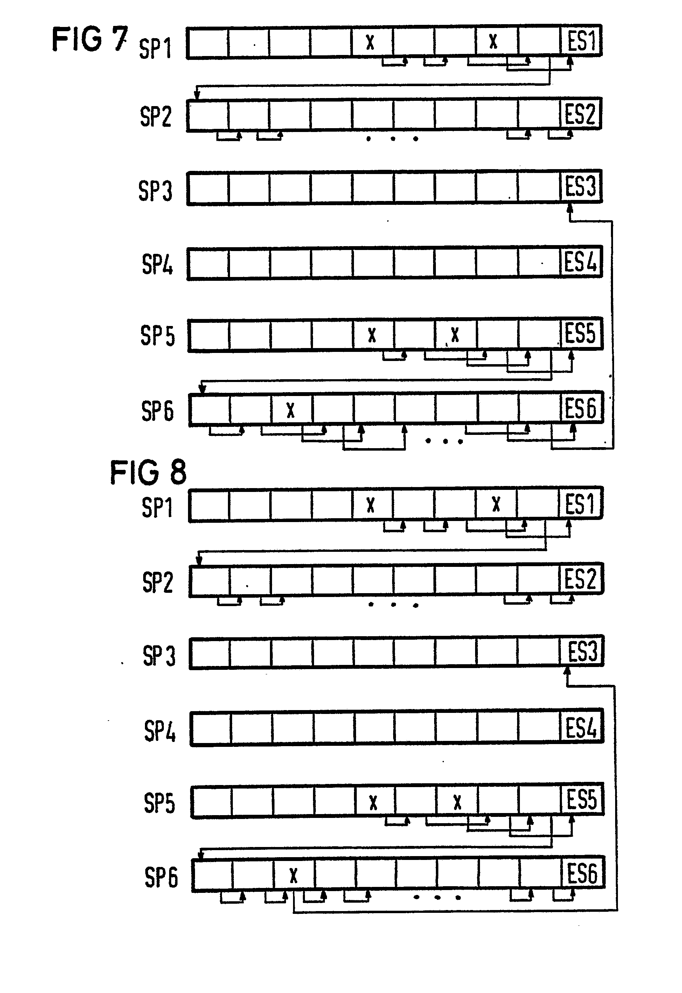

Das in FIG 7 dargestellte Ausführungsbeispiel bietet gegenüber der Variante nach FIG 5 insofern einen Vorteil, als hier eine Auslagerung von Sektoren aus der letzten Spur SP6 in freie Ersatzsektoren vorhergehender Spuren, beispielsweise in den Ersatzsektor ES3, möglich ist.

Das in FIG 8 dargestellte Beispiel entspricht im wesentlichen dem Beispiel von FIG 7. Der Unterschied besteht hier lediglich darin, daß ein in der letzten Spur SP6 auftretender Defektsektor ggf. nicht zu einer Verschiebung der folgenden Blöcke mit einer Zunahme der Verschiebeamplitude führt, sondern daß dieser Defektsektor unmittelbar in einen freien Ersatzsektor in einer der vorhergehenden Spuren, beispielsweise in den Ersatzsektor ES3 ausgelagert wird, wenn die durch den Defektsektor erhöhte Verschiebeamplitude die Anzahl der restlichen Ersatzsektoren übersteigen würde.

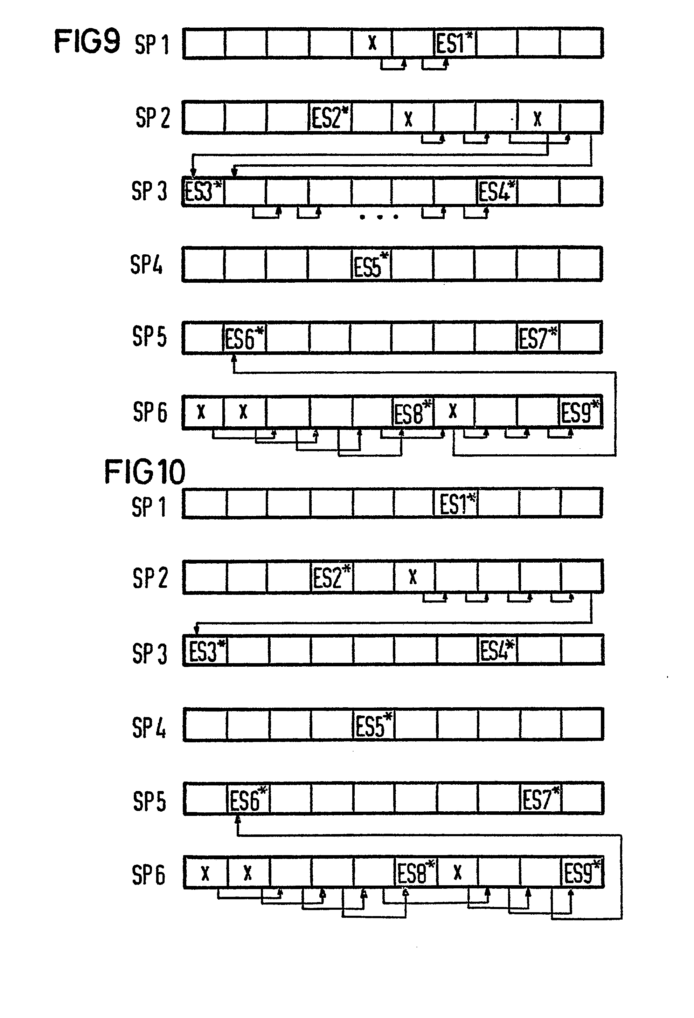

Bei dem Ausführungsbeispiel nach FIG 9 ist der gesamte Speicherraum pro Zylinder in einzelne Verschiebeeinheiten unterteilt, die nicht der vollen Länge einer Spur entsprechen. Anstelle von zehn Sektoren einschließlich des Ersatzsektors werden im vorliegenden Beispiel Verschiebeeinheiten zu jeweils sieben Sektoren einschließlich des Ersatzsektors gebildet. Dies erlaubt eine optimierte Verteilung der einzelnen Ersatzsektoren auf die verschiedenen Sektorpositionen und hat den Vorteil, daß bei einer Auslagerung eines defekten Nutzsektors aus der letzten Spur SP6 in einen unbenutzten Ersatzsektor in einer vorhergehenden Spur der, in Drehrichtung gesehen, jeweils nächstliegende freie Ersatzsektor, im vorliegenden Beispiel in der fünften Spur SP5 vorhandene Ersatzsektor E6*, verwendet werden kann. Der noch günstiger stehende Ersatzsektor E3* ist bereits belegt und kommt daher nicht in Betracht.

Das in FIG 10 gezeigte Ausführungsbeispiel entspricht weitgehend dem Beispiel nach FIG 9. Der Unterschied besteht lediglich darin, daß der in der letzten Spur SP6 auftretende Defektsektor nicht unmittelbar in einen freien Ersatzsektor ausgelagert, sondern in den Verschiebemodus einbezogen wird. Dies hat dann in analoger Weise wie beim Ausführungsbeispiel nach FIG 7 zur Folge, daß die Daten für den letzten Nutzsektor in den jeweils nächstgelegenen freien Ersatzsektor (in Drehrichtung gesehen) ausgelagert werden.

Das Verfahren nach FIG 7 bis 10 ist allerdings nur dann durchführbar, wenn im Anfangsetikett jedes Sektors die Adresse des logisch folgenden Sektors enthalten ist. Gegenüber dem im Zusammenhang mit der FIG 1 beschriebenen Anfangsetikett HE bedeutet dies insofern eine Änderung, als an die Stelle der logischen Adresse ID des aktuellen Sektors die physikalische Adresse des folgenden logischen Sektors tritt. Der Verzicht auf die logische Adresse des aktuellen Sektors ist deshalb möglich, weil allein durch die physikalische Adresse PA einschließlich der im Distanzzähler DC enthaltenen Verschiebeamplitude die logische Adresse des aktuell zu bearbeitenden Sektors eindeutig festgelegt ist.

## Patentansprüche

1. Kontrolleinheit für einen Magnetplattenspeicher (1) mit mehreren auf einer gemeinsamen Drehachse gelagerten Magnetplatten (2), die jeweils konzentrisch angeordnete Spuren aufweisen, und mehreren jeweils einer Plattenoberfläche zugeordneten, über eine gemeinsame Positioniereinrichtung (4) radial hin- und herbewegbar angeordneten Magnetköpfen (3),
- wobei die jeweils über- bzw. untereinander angeordneten Spuren (z.B. SP1 bis SP6) aller Plattenoberflächen zu je einem Zylinder zusammengefaßt und alle Magnetköpfe (3) gemeinsam auf jeweils einen dieser Zylinder positionierbar sind und
- wobei jede Spur (z.B. SP1) in einzelne, jeweils ein Anfangsetikett und ein Datenfeld aufweisende Sektoren (z.B. S1 bis Sn) unterteilt ist von denen einige als Ersatzsektoren (z.B ES1 bis ES6 bzw. ES1* bis ES9*) für Defektsektoren (X) bildende defekte Nutzsektoren verwendet werden, um in den Defektsektoren (X) nicht abspeicherbare Daten aufzunehmen, und
- wobei die nacheinander in einzelnen Sektoren (S1 bis Sn) einzuspeichernden Daten nach jeder Ansteuerung eines Defektsektors (X) jeweils entsprechend verschoben abgespeichert werden, bis wenigstens ein Ersatzsektor (z.B. ES1) erreicht wird,
- wobei die sich durch das Auftreten von Defektsektoren (X) ergebende Verschiebeamplitude für die Abspeicherung der Daten mit jedem innerhalb des Zylinders auftretenden Defektsektor (X) um jeweils eine Einheit erhöht wird dadurch gekennzeichnet,
- daß die für einen Zylinder vorgesehenen Ersatzsektoren (z.B. ES1 bis ES6 bzw. ES1* bis ES9*) über den gesamten Zylinder verteilt sind und wenigstens ein Ersatzsektor (z.B. ES6 bzw. ES9*) das Ende des Zylinders bildet und die Verschiebeamplitude für die Abspeicherung der Daten mit jedem auf einen Ersatzsektor folgenden ersten Nutzsektor um wenigstens eine Einheit bzw. auf Null reduziert wird.

2. Kontrolleinheit nach Anspruch 1, dadurch gekennzeichnet, daß mehrere Ersatzsektoren (z.B. ES6 bis ES8) unmittelbar aufeinanderfolgend zu einer Gruppe zusammengefaßt sind.

3. Kontrolleinheit nach Anspruch 2, dadurch gekennzeichnet, daß eine aus mehreren Ersatzsektoren (ES6 bis ES8) bestehende Gruppe am Ende des Zylinders angeordnet ist.

4. Kontrolleinheit nach einem der Ansprüche 1 bis 3, dadurch gekennzeichnet, daß bei einer in der letzten Spur (z.B. SP6) auftretenden Verschiebeamplitude, die größer ist als die Zahl der am Ende des Zylinders vorhandenen Ersatzsektoren (z.B. ES6 bzw. ES9*), die nicht mehr in diese Ersatzsektoren verschiebbaren Nutzsektoren in innerhalb des Zylinders in anderen Spuren (z.B. SP3 bzw. SP5) liegende unbenutzte Ersatzsektoren (z.B. ES3 bzw. ES6*) verlagerbar sind.

5. Kontrolleinheit nach Anspruch 4, dadurch gekennzeichnet, daß ein in der letzten Spur (z.B. SP6) neu auftretender Defektsektor (X) bei Erfüllung der Bedingung nach Anspruch 4 unmittelbar in einen unbenutzten Ersatzsektor (z.B. ES3 bzw. ES6*) in einer anderen Spur (z.B. SP3 bzw. SP5) verlagerbar ist.

**Claims**

1. Control unit for a magnetic disc memory (1) having a plurality of magnetic discs (2) mounted on a common axis of rotation, which discs have, in each case, concentrically arranged tracks and a plurality of magnetic heads (3) each assigned to a disc surface and arranged to be radially moveable backwards and forwards by means of a common positioning device (4)
   – tracks (e.g. SP1 to SP6), arranged in each case above or below one another, of all the disc surfaces being combined to form one cylinder each and all the magnetic heads (3) being commonly positionable on, in each case, one of these cylinders and
   – each track (e.g. SP1) being divided into individual sectors (e.g. S1 to Sn) having in each case one header and one data field, of which sectors some are used as alternate sectors (e.g. ES1 to ES6 or ES1* to ES9*) for defective useful sectors forming defective sectors (X) in order to record data which cannot be stored in the defective sectors (X), and
   – the data to be stored successively in individual sectors (S1 to Sn) being stored in each case correspondingly shifted after each actuation of a defective sector (X) until at least one alternate sector (e.g. ES1) is reached,
   – the amount of shift resulting from the occurrence of defective sectors (X), for the storage of data being increased by each defective sector (X) occurring within the cylinder by one unit in each case, characterized in that the alternate sectors (e.g. ES1 to ES6 or ES1* to ES9*) provided for a cylinder are distributed over the entire cylinder and at least one alternate sector (e.g. ES6 or ES9*) forms the end of the cylinder and the amount of shift for the storage of the data is reduced with each first useful sector following an alternate sector by at least one unit or to zero.

2. Control unit according to Claim 1, characterized in that a plurality of alternate sectors (e.g. ES6 to ES8) are combined directly sequentially to form a group.

3. Control unit according to Claim 2, characterized in that a group consisting of a plurality of alternate sectors (ES6 to ES8) is arranged at the end of the cylinder.

4. Control unit according to one of Claims 1 to 3, characterized in that, with an amount of shift occurring in the last track (e.g. SP6) which is greater than the number of alternate sectors (e.g. ES6 or ES9*) present at the end of the cylinder, the useful sectors which can no longer be shifted into these alternate sectors can be displaced into unused alternate sectors (e.g. ES3 or ES6*) lying within the cylinder in other tracks (e.g. SP3 or SP5).

5. Control unit according to Claim 4, characterized in that a newly occurring defective sector (X) in the last track (e.g. SP6) can be displaced, on fulfilment of the condition according to Claim 4, directly into an unused alternate sector (e.g. ES3 or ES6*) in another track (e.g. SP3 or SP5).

**Revendications**

1. Unité de commande pour une mémoire à disques magnétiques (1) comportant plusieurs disques magnétiques (2), qui sont portés par un axe de rotation commun et comportent respectivement des pistes concentriques, et plusieurs têtes magnétiques (3), qui sont associées respectivement à une surface des disques et sont disposées de manière a être déplacées radialement en va-et-vient au moyen d'un dispositif commun de positionnement (4), et
   – dans laquelle les pistes respectivement superposées (par exemple SP1 à SP6) de toutes les surfaces des disques sont réunies pour former un cylindre et toutes les têtes magnétiques (3) peuvent être positionnées en commun sur l'un de ces cylindres respectif, et
   – dans laquelle chaque piste (par exemple SP1) est subdivisée en des secteurs individuels (par exemple S1 à Sn) possédant respectivement une étiquette de début et une zone de données, et dont quelques-uns sont utilisés comme secteurs de remplacement (par exemple ES1 à ES6 ou ES1* à ES9*) pour des secteurs utiles défectueux formant des secteurs défectueux (X), de manière à recevoir des données qui ne peuvent pas être mémorisées dans les secteurs défectueux (X), et
   – dans laquelle les données devant être mémorisées successivement dans des secteurs individuels (S1 à Sn) sont mémorisées après chaque commande d'un secteur défectueux (X), en étant respectivement décalées de façon correspondante, jusqu'à ce qu'au moins un secteur de remplacement (par exemple ES1) soit atteint, et
   – dans laquelle l'amplitude de transfert pour la mémorisation des données, qui résulte de l'apparition de secteurs défectueux (X), est accrue d'une unité lors de l'apparition de chaque secteur défectueux (X) à l'intérieur du cylindre, caractérisée par le fait
que les secteurs de remplacement (par exemple ES1 à ES6 ou ES1* à ES9*), prévus pour un cylindre, sont répartis sur la totalité du cylindre et qu'au moins un secteur de remplacement (par exemple ES6 ou ES9*) constitue la fin du cylindre et que l'amplitude de déplacement pour la mémorisation des données est accrue au moins d'une unité ou est réduite à zéro lors de l'apparition de chaque premier secteur utile qui succède un secteur de remplacement.

2. Unité de commande suivant la revendication 1, caractérisée par le fait que plusieurs secteurs de remplacement (par exemple ES6 à ES8) qui se suivent directement sont rassemblés successivement pour former un groupe.

3. Unité de commande suivant la revendication 2, caractérisée par le fait qu'un groupe formé de plusieurs secteurs de remplacement (ES6 à ES8) est disposé à l'extrémité du cylindre.

4. Unité de commande suivant l'une des revendications 1 à 3, caractérisée par le fait que dans le cas où l'amplitude de déplacement, qui apparaît dans la dernière piste (par exemple SP6), est supérieure au nombre des secteurs de remplacement (par exemple ES6 ou ES9*), qui sont présents à la fin du cylindre, les secteurs utiles qui ne peuvent plus être déplacés dans ces secteurs de remplacement, peuvent être déplacés pour être amenés dans des secteurs inutilisés (par exemple ES3 ou ES6*) situés dans d'autres pistes (par exemple SP3 ou SP5) à l'intérieur du cylindre.

5. Unité de commande suivant la revendication 4, caractérisée par le fait que lorsque la condition de la revendication 4 est satisfaite, un secteur défectueux (X) nouvellement apparu dans la dernière piste (par exemple SP6) est décalé pour être amené directement dans un secteur de remplacement inutilisé (par exemple ES3 ou ES6*) dans une autre piste (par exemple SP3 ou SP5).

6

# FIG 1

FIG 2

```
          ┌──────────────────┐
          │ Lesen            │
          │ Anfangsetikett   │
          └──────────────────┘
                   │
          ┌──────────────────┐
          │ Prüfen  Flags    │
          └──────────────────┘
                   │
          ╱────────────────╲
    N    ╱  Sektor          ╲   J
  ◄─────◄    defekt          ►─────►
          ╲                 ╱
           ╲───────────────╱
```

| Lesen/Schreiben Datenfeld des Originalsektors |

```
                    ╱──────────────────╲
               N   ╱   Sektor           ╲   J
             ◄────◄   zugewiesen         ►────►
                    ╲                    ╱
                     ╲──────────────────╱
```

| Überspringen Datenfeld | | Positionieren auf Ersatzsektor |

| Lesen und prüfen Anfangsetikett des folg. Sektors | | Prüfen des Anfangsetiketts des Ersatzsektors |

| Lesen/Schreiben Datenfeld des folg. Sektors | | Lesen/Schreiben Datenfeld des Ersatzsektors |

```
          ╱──────────────╲                    ╱──────────────╲
         ╱   Letzter      ╲  J                ╱   Letzter      ╲  J
        ◄    Sektor        ►────►            ◄    Sektor        ►────►
         ╲   bearbeitet   ╱                   ╲   bearbeitet   ╱
          ╲──────────────╱                     ╲──────────────╱
                │ N                                   │ N
```

| Befehlsende | | Befehlsende |

| Zurückpositionieren zum Defektsektor +1 |

FIG3

FIG4

FIG5

FIG6

FIG 7

FIG 8

FIG 9

FIG 10